# EUROPÄISCHE PATENTANMELDUNG

(11) **EP 1 404 092 A1**
(43) Veröffentlichungstag der Anmeldung: **31.03.2004**
(21) Anmeldenummer: 03021445.6
(22) Anmeldetag: 23.09.2003
(51) Int. Cl.: H04M 3/42

(54) **Verfahren, System und Einrichtung zum Versenden und Empfangen von Nachrichten, insbesondere von Multimedia- und/oder Textnachrichten und/oder Dateien, über ein Festnetz**

(30) Priorität: 27.09.2002 DE 10245456
(71) Anmelder: Gkikas, Karolos, 166 75 Glyfada, Athen (GR)
(72) Erfinder: Gkikas, Karolos, 166 75 Glyfada, Athen (GR)
(74) Vertreter: Haft, von Puttkamer, Berngruber, Czybulka

(57) **Zusammenfassung**

Im Rahmen des Verfahrens zum Versenden und Empfangen von Multimedia- und/oder Textnachrichten und/oder Dateien über ein Festnetz werden die Nachrichten bzw. Dateien mittels einer Eingabe/Ausgabeeinrichtung (3) und einer Schnittstelleneinrichtung (1) über das Festnetz (2) versendet und/oder empfangen, wobei die Schnittstelleneinrichtung (1) einerseits mit zumindest einer Festnetzleitung und andererseits mit der Eingabe/Ausgabeeinrichtung (3) schnurlos oder über ein Kabel verbunden ist.

## Beschreibung

Die vorliegende Erfindung bezieht sich auf ein Verfahren, ein System und eine Einrichtung zum Versenden von Nachrichten, insbesondere Multimedia- und/oder Textnachrichten und/oder Dateien über ein Festnetz bzw. eine Festnetzleitung.

Heutzutage genießt das Versenden und Empfangen von Nachrichten über Mobiltelefone eine hohe Akzeptanz. Insbesondere hat sich die Kommunikation über sogenannte Kurznachrichten über den Kurznachrichtenservice (SMS, Short-Message-Service) zwischen zwei Benutzern von Mobiltelefonen sehr bewährt. Jeden Tag werden mehrere Millionen von SMS-Nachrichten versendet und empfangen. Desweiteren werden sogenannte MMS-Nachrichten, d.h. Multimedia-Service-Nachrichten (also Nachrichten, welche eine Kombination aus Text und Ton und/oder Bilder enthalten), immer beliebter.

Jedoch ist das Versenden bzw. Empfangen von Nachrichten hauptsächlich mittels Mobiltelefonen durchführbar. In letzter Zeit sind Versuche unternommen worden, ein Senden bzw. Empfangen von Textnachrichten über das Festnetz zu ermöglichen. Diese Versuche haben jedoch nicht den gehofften Erfolg gehabt, da ein Versenden und Empfangen von Nachrichten mit den vorhandenen Telefongeräten nicht möglich war, sodass der Benutzer ein neues, meist teures Telefon kaufen musste, welches diese Funktionalität zur Verfügung stellt.

Desweiteren sind die neuen Telefongeräte, welche einen Nachrichtenversand bzw. Empfang über das Festnetz ermöglichen, kompliziert, sodass sich nicht jeder ohne weiteres mit der Fülle von Funktionen vertraut machen kann. Außerdem sind diese Telefongeräte zum Versand und Empfang von Dateien nicht geeignet.

Der vorliegenden Erfindung liegt daher die Aufgabe zugrunde, ein Verfahren zum Versenden und Empfangen von Nachrichten, insbesondere von Multimedia/Textnachrichten, und/oder Dateien über ein Festnetz vorzustellen, welches ohne die Notwendigkeit von neuen Telefongeräten auf einfache Weise durchführbar ist.

Zudem soll im Rahmen der Erfindung eine Einrichtung vorgestellt werden, welche zur Durchführung des Verfahrens geeignet ist und insbesondere das Versenden und Empfangen von Nachrichten und/oder Dateien über bereits vorhandene Geräte über das Festnetz ermöglicht. In diesem Zusammenhang sollen im Rahmen der hier vorgestellten Erfindung unterschiedliche Systeme vorgestellt werden, welche zur Durchführung des Verfahrens mittels der erfindungsgemäßen Einrichtung geeignet sind.

Diese Aufgabe wird für ein Verfahren durch die Merkmale des Patentanspruches 1 gelöst. Ein System zum Versenden und/oder Empfangen von Nachrichten oder Dateien über ein Festnetz, die auch zur Durchführung des erfindungsgemäßen Verfahrens geeignet ist, ist Gegenstand des Anspruchs 15; eine Einrichtung zum Versenden und/oder Empfangen von Nachrichten oder Dateien über ein Festnetz ist im Rahmen des Patentanspruchs 21 beschrieben. Weitere Ausgestaltungen, Varianten und Vorteile gehen aus den entsprechenden Unteransprüchen hervor.

Demnach wird vorgeschlagen, zum Versenden und/oder Empfangen von Nachrichten über ein Festnetz eine Schnittstelleneinrichtung zu verwenden, welche einerseits mit dem Festnetz (also zumindest mit einer Festnetzleitung) und andererseits mit einem herkömmlichen Gerät als Eingabe/Ausgabeeinrichtung verbindbar ist. Als Eingabe/Ausgabeeinrichtung kann ein Mobiltelefon, ein Computer, beispielsweise ein Notebook, ein PDA-Gerät (Personal-Digital-Assistant), eine Spielkonsole, eine Armbanduhr oder eine elektronische Computerspieleinrichtung und dergleichen eingesetzt werden. Hierbei ist die Verbindung zwischen der Schnittstelleneinrichtung und dem herkömmlichen Gerät vorzugsweise schnurlos, beispielsweise über Funk, Infrarot und/oder Bluetooth®-Technik.

Gemäß einer Variante der vorliegenden Erfindung können bei entsprechender Funktionalität der Schnittstelleneinrichtung auch herkömmliche Dateien versendet werden, beispielsweise Dokumente, Präsentationen etc.

Durch die Verwendung von herkömmlichen Geräten als Eingabe/Ausgebeeinrichtungen entfällt die Notwendigkeit eines neuen Telefonapparates, welcher eine Anzeige für alphanumerische Zeichen, eine Tastatur, Speicherkapazität und Bearbeitungs-Software aufweist; dies liegt daran, dass ein PDA-Gerät oder ein Handy oder ein Notebook diese Funktionalitäten bereits aufweisen. Auf diese Weise wird in vorteilhafter Weise die Bedienfreundlichkeit erhöht, da sich ein Benutzer des Verfahrens nicht an ein neues Gerät gewöhnen muss. Zudem sind neue Geräte mit SMS-Funktionalitäten meistens groß und teuer.

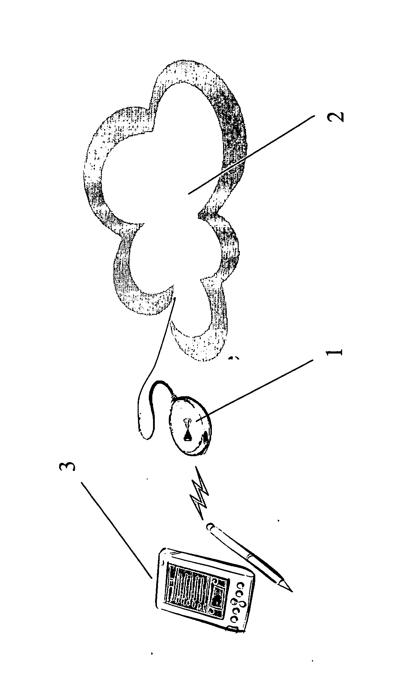

Die Erfindung wird im folgenden anhand der Figur, welche eine schematische Darstellung einer Ausführungsform des erfindungsgemäßen Verfahrens darstellt, näher erläutert.

Gemäß der Erfindung ist eine Schnittstelleneinrichtung 1 vorgesehen, welche sowohl mit dem Festnetz 2 als auch mit einer geeigneten Ein- und Ausgabeeinrichtung 3 für Nachrichten und/oder Dateien verbindbar ist; in der Figur ist beispielhaft als Eingabe/Ausgabeeinrichtung 3 ein PDA dargestellt. Die Verbindung der Schnittstelleneinrichtung 1 zum Festnetz kann mittels eines Verbindungskabels erfolgen. Beispielsweise kann das Verbindungskabel direkt an die Telefonsteckdose oder an eine Schnittstelle einer Telefonanlage angeschlossen werden. Dahingegen ist die Verbindung zwischen der Schnittstelleneinrichtung und der Eingabe/Ausgabeeinrichtung vorteilhafterweise schnurlos, obwohl auch eine Kabelverbindung, beispielsweise über eine USB- oder serielle Schnittstelle denkbar ist. Bei einer schnurlosen Verbindung handelt es sich vorzugsweise um eine Infrarot-, Bluetooth ®oder Funkverbindung. Zu diesem Zweck weist die Schnittstelleneinrichtung 1 entsprechende Schnittstellen auf.

Gemäß der Erfindung wird beim Vorliegen zumindest einer nicht abgerufenen Nachricht ein akustisches und/oder visuelles Signal erzeugt. Zu diesem Zweck kann die erfindungsgemäße Schnittstelleneinrichtung 1 eine oder mehrere Einrichtungen aufweisen, welche entsprechend der Funktionalität das Vorhandensein neu empfangener bzw. nicht abgerufener Nachrichten, beispielsweise Textnachrichten oder Voice-Nachrichten, signalisieren. Bevorzugterweise handelt es sich dabei um LED-Leuchten, welche beispielsweise bei Vorliegen einer ungelesenen Nachricht aufleuchten; es ist aber auch möglich, neue Nachrichten beispielsweise durch ein akustisches Signal zu signalisieren.

Im allgemeinen sind also visuelle und/oder akustische Signalerzeugungseinrichtungen vorgesehen, welche den Benutzer über das Vorliegen neuer Nachrichten informieren. Im Rahmen einer bevorzugten Ausführungsform ist für jede Art von Nachricht eine eigene Leuchte vorgesehen, beispielsweise eine rote für Textnachrichten, eine gelbe für Nachrichten aus einem optional angeschlossenen Anrufbeantworter, eine grüne für Fotos, MMS und dergleichen. Im Rahmen der Erfindung kann die Schnittstelleneinrichtung weitere Leuchten aufweisen, beispielsweise zum Anzeigen des Betriebszustandes.

Die Schnittstelleneinrichtung 1 enthält die Soft- und Hardware, die erforderlich ist, um die Nachrichten an das Festnetz zu übermitteln bzw. um die angekommenen Nachrichten vom Festnetz zu empfangen. Die Energieversorgung kann mittels Batterien, über einen Stromanschluss oder über den Festnetzanschluss erfolgen.

Ferner ist die Schnittstelleneinrichtung 1 geeignet, mit einem Gerät, das als Eingabe/Ausgabeeinrichtung fungiert, verbunden zu werden. Vorzugsweise werden als Eingabe/Ausgabeeinrichtungen herkömmliche Mobiltelefone, PDAs, Computer, Spielkonsolen oder elektronische Computerspieleinrichtungen aber auch Armbanduhren etc. verwendet. Grundsätzlich kann als Eingabe/Ausgabeeinrichtung jedes geeignete Gerät mit Speicher, Eingabe/Ausgabeeigenschaften und Verbindungsmöglichkeit zu der Schnittstelleneinrichtung verwendet werden.

Wenn nun ein Benutzer eine Nachricht über das Festnetz versenden möchte, dann ist die Vorgehensweise wie folgt: Der Benutzer schreibt oder verändert die Nachricht mittels Verwendung eines PDAs, eines Mobiltelefones, einer Spielkonsole, einer elektronischen Computerspieleinrichtung oder, wie bereits erwähnt, eines anderen geeigneten Gerätes. Hierbei ist es möglich, die Nachrichten an einem anderen Ort zu verfassen als der Ort, an dem die Schnittstelleneinrichtung 1 installiert ist. Die verfassten Nachrichten werden dann optional im Speicher der Eingabe/Ausgabegeinrichtung 3 gespeichert. Wenn der Benutzer die Nachrichten versenden möchte, dann wird die vorzugsweise schnurlose Datenübertragung zwischen Schnittstellenrichtung 1 und Eingabe/Ausgabeeinrichtung 3 aktiviert, sodass die Nachrichten an die Schnittstelleneinrichtung 1 übertragen werden. Während der Datenübertragung kann optional eine LED- oder ähnliche Leuchte leuchten. Sobald die Übertragung beendet ist, werden diese von der Schnittstelleneinrichtung mittels geeigneter Kommunikationsprotokolle an das Festnetzsystem geschickt, wobei eine erfolgreiche Übertragung ebenfalls optional durch ein optisches und/oder akustisches Signal angedeutet wird.

Gemäß einer weiteren Ausführungsform der Erfindung können die Nachrichten oder Dateien in der Schnittstelleneinrichtung 1 bis zum Abrufen und/oder bis zum Versenden zwischengespeichert werden, wobei ein benutzergesteuertes Speichern ebenfalls möglich ist.

Gemäß der Erfindung ist vorgesehen, dass der Betriebszustand der Schnittstelleneinrichtung 1 über die Eingabe/Ausgabeeinrichtung 3 kontrolliert und verändert werden kann. Desweiteren können über die Eingabe/Ausgabeeinrichtung 3 die Übertragungsoptionen und weitere Einstellungen der Schnittstelleneinrichtung 1 entsprechend geändert werden.

Eine besonders vorteilhafte Weiterbildung der Erfindung sieht vor, dass die Schnittstelleneinrichtung 1 in ein mit der Festnetzleitung verbindbares Telephongerät und/oder eine Eingabe/Ausgabeeinrichtung 3 integriert werden kann.

Die erfindungsgemäße Vorgehensweise weist unter anderem den Vorteil auf, dass das Verfassen, Verändern, Speichern und Lesen von Nachrichten sowie die Eingabe der Daten des Empfängers mittels dem Benutzer bereits bekannter Geräte erfolgen kann. Hierbei können mehrere Eingabe/Ausgabeeinrichtungen mit einer Schnittstelleneinrichtung verbindbar sein, beispielsweise ein Mobiltelefon zum Versenden bzw. Empfangen von Textnachrichten oder ein Notebook zum Versenden bzw. Empfangen von Bildern oder Dateien. Zudem ist die erfindungsgemäße Schnittstelleneinrichtung sehr handlich, da sie eine geringe Größe aufweist und somit leicht transportierbar, beispielsweise auf Reisen.

Desweiteren ist die erfindungsgemäße Schnittstelleneinrichtung unabhängig von Sprach- und Alphabeteinstellungen, da all diese Einstellungen über die Eingabe/Ausgabeeinrichtung erfolgen. In diesem Zusammenhang sei auch erwähnt, dass die Kosten für eine erfindungsgemäße Schnittstelleneinrichtung wesentlich geringer sind als die Kosten für ein komplett neues Gerät.

Erfindungsgemäß ist vorgesehen, dass zur Sicherheit nur Eingabe/Ausgabeeinrichtungen mit der Schnittstelleneinrichtung verbunden werden können, welche die Rechte dazu besitzen bzw. bei der Schnittstelleneinrichtung angemeldet sind. Zu diesem Zweck können beim Installationsprozess der Schnittstelleneinrichtung oder später, wenn z.B. eine neue Eingabe/Ausgabeeinrichtung verwendet werden soll, die Eingabe/Ausgabeeinrichtungen bestimmt werden, über die eine Verbindung zur Schnittstelleneinrichtung hergestellt werden darf. Auf diese Weise ist es möglich, eine Gruppe von Eingabe/Ausgabeeinrichtungen zu bilden, welche mit der Schnittstelleneinrichtung kommunizieren können. Hierbei können unterschiedliche Eingabe/Ausgabeeinrichtungen unterschiedlichen Personen bzw. Sendern und/oder Empfängern zugeordnet werden, so dass z.B. nur die Eingabe/Ausgabeeinrichtung des Empfängers eine für den Empfänger bestimmte Nachricht oder Datei empfangen kann. Analog dazu wird eine von einer bestimmten Eingabe/Ausgabeeinrichtung einer einer Schnittstelleneinrichtung zugeordneten Gruppe versandte Nachricht oder Datei dem Sender eindeutig zugeordnet.

Um die Sicherheit zu erhöhen, können Verschlüsselungstechniken in das Verfahren integriert werden. Beispielsweise kann die Kombination eines,öffentlichen und eines privaten Schlüssels verwendet werden, um ein Lesen von Nachrichten von unbefugten Personen zu unterbinden.

Im Rahmen einer Variante ist optional vorgesehen, dass ein Versenden und/oder Empfangen von Nachrichten und/oder Dateien über die Schnittstelleneinrichtung nach der Eingabe eines Passworts oder einer PIN über die Eingabe/Ausgabeeinrichtung möglich ist.

Über die herkömmlichen zu verwendenden Eingabe/Ausgabeeinrichtungen kann die aktuelle Verbindungsund/oder Kommunikationssoftware in vorteilhafter Weise abgerufen werden, beispielsweise mittels der Eingabe/Ausgabeeinrichtungen oder eines mit den Eingabe/Ausgabeeinrichtungen verbindbaren Gerätes über eine Internet-Verbindung.

Das hier vorgestellte Verfahren weist u.A. den Vorteil auf, dass durch den zusätzlichen Einsatz der sehr einfach aufgebauten und handlichen Schnittstelleneinrichtung, herkömmliche Geräte als Eingabe/Ausgabeeinrichtungen zum Versenden und Empfangen von Nachrichten und/oder Dateien über ein Festnetz einsetzbar sind, was einerseits eine Reduzierung der Kosten und andererseits eine erhöhte Benutzerfreundlichkeit zur Folge hat.

## Patentansprüche

1. Verfahren zum Versenden und Empfangen von Multimediaund/oder Textnachrichten und/oder Dateien über ein Festnetz, **dadurch gekennzeichnet, dass** die Nachrichten bzw. Dateien mittels einer Eingabe/Ausgabeeinrichtung (3) und einer Schnittstelleneinrichtung (1) über das Festnetz (2) versendet und/oder empfangen werden, wobei die Schnittstelleneinrichtung (1) einerseits mit zumindest einer Festnetzleitung und andererseits mit der Eingabe/Ausgabeeinrichtung (3) schnurlos oder über ein Kabel verbunden ist.

2. Verfahren nach Anspruch 1, **dadurch gekennzeichnet, dass** die Eingabe, Ausgabe und Verarbeitung der Nachrichten oder Dateien durch die Eingabe/Ausgabeeinrichtung (3) erfolgt.

3. Verfahren nach Anspruch 1 oder 2, **dadurch gekennzeichnet, dass** beim Vorliegen zumindest einer nicht abgerufenen Nachricht oder Datei ein akustisches und/oder visuelles Signal erzeugt wird.

4. Verfahren nach Anspruch 3, **dadurch gekennzeichnet, dass** jedem Nachrichtentyp oder Dateientyp ein eigenes akustisches und/oder visuelles Signal zugeordnet wird.

5. Verfahren nach einem der vorangehenden Ansprüche,
**dadurch gekennzeichnet, dass** als Eingabe/Ausgabeeinrichtung (3) ein Mobiltelefon, ein PDA, ein Computer, eine Armbanduhr, eine Spielkonsole, eine elektronische Computerspieleinrichtung oder jedes geeignete Gerät mit Speicher, Eingabe/Ausgabeeigenschaften und Verbindungsmöglichkeit zu der Schnittstelleneinrichtung (1) verwendet wird.

6. Verfahren nach einem der vorangehenden Ansprüche, **dadurch gekennzeichnet, dass** zum Versenden einer oder mehrerer Nachrichten oder Dateien, diese mittels der Eingabe/Ausgabeeinrichtung (3) geschrieben und/oder verändert und/oder gespeichert werden, wobei anschließend eine Verbindung zwischen Eingabe/Ausgabeeinrichtung (3) und Schnittstelleneinrichtung (1) hergestellt wird und die Nachrichten oder Dateien an die Schnittstelleneinrichtung (1) übertragen werden, wo sie dann über das Festnetz (2) versendet werden.

7. Verfahren nach einem der vorangehenden Ansprüche, **dadurch gekennzeichnet, dass** zum Empfangen einer oder mehrerer Nachrichten oder Dateien aus dem Festnetz, eine Verbindung zwischen Eingabe/Ausgabeeinrichtung (3) und Schnittstelleneinrichtung (1) hergestellt wird und dass anschließend die Nachrichten oder Dateien von der Schnittstelleneinrichtung (1) an die Eingabe/Ausgabeeinrichtung (3) übertragen werden.

8. Verfahren nach einem der vorangehenden Ansprüche, **dadurch gekennzeichnet, dass** nur Eingabe/Ausgabeeinrichtungen (3) mit der Schnittstelleneinrichtung (1) verbunden werden können, welche die Rechte dazu besitzen oder bei der Schnittstelleneinrichtung (1) angemeldet sind.

9. Verfahren nach Anspruch 8, **dadurch gekennzeichnet, dass** unterschiedliche Eingabe/Ausgabeeinrichtungen (3) unterschiedlichen Personen bzw. Sendern und/oder Empfängern zugeordnet werden.

10. Verfahren nach einem der vorangehenden Ansprüche, **dadurch gekennzeichnet, dass** die Nachrichten oder Dateien verschlüsselt übermittelt werden.

11. Verfahren nach einem der vorangehenden Ansprüche, **dadurch gekennzeichnet, dass** ein Versenden und/oder Empfangen von Nachrichten und/oder Dateien über die Schnittstelleneinrichtung (1) nach der Eingabe eines Passworts oder einer PIN über die Eingabe/Ausgabeeinrichtung (3) möglich ist.

12. Verfahren nach einem der vorangehenden Ansprüche, **dadurch gekennzeichnet, dass** die aktuelle Verbindungs- und/oder Kommunikationssoftware zwischen Eingabe/Ausgabeeinrichtung (3) und Schnittstelleneinrichtung (1) mittels der Eingabe/Ausgabeeinrichtung (3) oder eines mit der Eingabe/Ausgabeeinrichtung (3) verbindbaren Gerätes über eine Internet-Verbindung abgerufen wird.

13. Verfahren nach einem der vorangehenden Ansprüche, **dadurch gekennzeichnet, dass** die Nachrichten oder Dateien bis zum Abrufen und/oder bis zum Versenden zwischengespeichert werden.

14. Verfahren nach einem der vorangehenden Ansprüche, **dadurch gekennzeichnet, dass** die Nachrichten oder Dateien bis zum Abrufen und/oder bis zum Versenden in der Schnittstelleneinrichtung (1) zwischengespeichert werden.

15. System zum Versenden und Empfangen von Multimediaund/oder Textnachrichten und/oder Dateien über Festnetzleitungen, insbesondere zur Durchführung des Verfahrens nach einem der Ansprüche 1-14, **dadurch gekennzeichnet, dass** es zumindest eine Eingabe/Ausgabeeinrichtung (3) zum Schreiben und/oder Verändern und/oder Speichern der Nachrichten und/oder der Dateien und eine Schnittstelleneinrichtung (1) umfasst, wobei die Schnittstelleneinrichtung (1) mit dem Festnetz und der zumindest einen Eingabe/Ausgabeeinrichtung (3) verbindbar ist.

16. System nach Anspruch 15, **dadurch gekennzeichnet, dass** die Schnittstelleneinrichtung (1) mit der Eingabe/Ausgabeeinrichtung (3) schnurlos oder über ein Kabel verbindbar ist.

17. System nach Anspruch 15 oder 16, **dadurch gekennzeichnet, dass** die Schnittstelleneinrichtung (1) mit dem Festnetz (2) über ein Kabel verbindbar ist.

18. System nach einem der Ansprüche 15 bis 17, **dadurch gekennzeichnet, dass** die Eingabe/Ausgabeeinrichtung (3) ein Mobiltelefon, ein PDA, ein Computer, eine Armbanduhr, eine Spielkonsole, eine elektronische Computerspieleinrichtung und/oder jedes weitere geeignete Gerät mit Speicher, Eingabe/Ausgabeeigenschaften und Verbindungsmöglichkeit zu der Schnittstelleneinrichtung (1) ist.

19. System nach einem der Ansprüche 15 bis 18, **dadurch gekennzeichnet, dass** die schnurrlose Verbindung der Schnittstelleneinrichtung (1) mit der Eingabe/Ausgabeeinrichtung (3) eine Funk-, Infrarot- oder Bluetooth® -Verbindung ist.

20. System nach einem der Ansprüche 15 bis 19, **dadurch gekennzeichnet, dass** die Schnittstelleneinrichtung (1) in ein Telephongerät integrierbar ist.

21. Einrichtung zum Versenden und Empfangen von Multimediaund/oder Textnachrichten und/oder Dateien über Festnetzleitungen mittels einer Eingabe/Ausgabeeinrichtung (3), insbesondere gemäß dem Verfahren nach den Ansprüchen 1-14, **dadurch gekennzeichnet, dass** sie eine Schnittstelleneinrichtung (1) ist, welche einerseits mit dem Festnetz und andererseits mit der Eingabe/Ausgabeeinrichtung (3) schnurlos oder über Kabel verbindbar ist.

22. Einrichtung nach Anspruch 21, **dadurch gekennzeichnet, dass** sie Soft- und Hardware zum bidirektionalen Umwandeln der Signale der Eingabe/Ausgabeeinrichtung (3) in festnetzgeeignete Signale und umgekehrt enthält.

23. Einrichtung nach Anspruch 21 oder 22, **dadurch gekennzeichnet, dass** sie Speicher zum Speichern oder Zwischenspeichern der Nachrichten und/oder Dateien enthält.

24. Einrichtung nach Anspruch 21, 22 oder 23, **dadurch gekennzeichnet, dass** sie mindestens eine Einrichtung zum Erzeugen eines akustischen und/oder visuellen Signals aufweist.

25. Einrichtung nach Anspruch 21, 22, 23 oder 24, **dadurch gekennzeichnet, dass** sie in ein Telephongerät und/oder eine Eingabe/Ausgabeeinrichtung (3) integrierbar ist.

26. Verwendung der Einrichtung nach Anspruch 21, 22, 23, 24 oder 25 in ein System nach einem der Ansprüche 15 bis 20.
